# EUROPÄISCHE PATENTSCHRIFT

(11) **EP 3 686 404 B1**
(45) Veröffentlichungstag und Bekanntmachung des Hinweises auf die Patenterteilung: **26.05.2021**
(21) Anmeldenummer: 20153329.6
(22) Anmeldetag: 23.01.2020
(51) Int. Cl.: F01N 3/10, F01N 3/20, F01N 9/00, F01N 13/00

(54) **VORRICHTUNG UND VERFAHREN ZUR ABGASNACHBEHANDLUNG EINES VERBRENNUNGSMOTORS**
DEVICE AND METHOD FOR TREATING THE EXHAUST GAS OF AN INTERNAL COMBUSTION ENGINE
DISPOSITIF ET PROCÉDÉ DE POST-TRAITEMENT DES GAZ D'ÉCHAPPEMENT D'UN MOTEUR À COMBUSTION INTERNE

(30) Priorität: 23.01.2019 DE 102019101576
(43) Veröffentlichungstag der Anmeldung: 29.07.2020
(73) Patentinhaber: VOLKSWAGEN AG, 38440 Wolfsburg (DE); Dr.Ing. h.c. F. Porsche Aktiengesellschaft, 70435 Stuttgart (DE)
(72) Erfinder: Baron von Ceumern-Lindenstjerna, Falk-Christian, 38124 Braunschweig (DE); Paukner, Stefan, 38442 Wolfsburg (DE); Kaack, Michael, 38531 Rötgesbüttel (DE); Hemminger, Sebastian, 71739 Oberriexingen (DE)
(74) Vertreter: Gulde & Partner

(56) Entgegenhaltungen:
- DE-A1- 4 340 613
- DE-A1-102012 021 573
- DE-A1-102016 206 394
- DE-A1-102017 113 366
- JP-A- H0 586 845

## Beschreibung

Die Erfindung betrifft eine Vorrichtung zur Abgasnachbehandlung eines Verbrennungsmotors, sowie ein Verfahren zur Abgasnachbehandlung eines Verbrennungsmotors, gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei kommt dem Zeitraum unmittelbar nach einem Kaltstart des Verbrennungsmotors eine besondere Bedeutung hinsichtlich der Emissionen zu, da in dieser Phase die Abgasnachbehandlungskomponenten möglichst schnell auf ihre Betriebstemperatur aufgeheizt werden sollen, um eine effiziente Abgasnachbehandlung zu ermöglichen. Bei Ottomotoren ist insbesondere das Aufheizen eines (motornahen) Drei-Wege-Katalysators maßgeblich für die Emissionen eines Kraftfahrzeuges. Aus dem Stand der Technik sind Verbrennungsmotoren mit einem Sekundärluftsystem bekannt, bei welchen zum Aufheizen des Drei-Wege-Katalysators Sekundärluft in die Abgasanlage stromabwärts eines Auslasses des Verbrennungsmotors und stromaufwärts des Drei-Wege-Katalysators eingebracht wird. Ferner sind Abgasnachbehandlungssysteme mit einem Abgasbrenner bekannt, bei welchem ein heißes Abgas des Abgasbrenners in die Abgasanlage eingeleitet wird, um den Drei-Wege-Katalysator auf seine Betriebstemperatur aufzuheizen. Durch einen Abgasbrenner kann auch ein Drei-Wege-Katalysator in Unterbodenlage unmittelbar nach einem Kaltstart des Verbrennungsmotors auf seine Betriebstemperatur aufgeheizt werden, da die heißen Brennergase an entsprechender Stelle in die Abgasanlage eingeleitet werden können und somit ein Beheizen des Drei-Wege-Katalysators im Wesentlichen unabhängig vom Abgasstrom des Verbrennungsmotors ermöglichen.

Aus der DE 195 08 013 A1 ist ein Abgasnachbehandlungssystem für einen Verbrennungsmotor bekannt, bei welchem ein Abgasbrenner mit einem Sekundärluftsystem vorgesehen ist, mit welchem ein heißes Brennerabgas stromaufwärts eines Drei-Wege-Katalysators in den Abgaskanal des Verbrennungsmotors eingeleitet wird, um den Drei-Wege-Katalysator möglichst schnell auf seine Betriebstemperatur aufzuheizen.

Die DE 10 2010 027 984 A1 offenbart ein Verfahren zum Betreiben einer Abgasanlage eines Verbrennungsmotors, bei dem mindestens ein Parameter des in einem Abgaskanal des Verbrennungsmotors strömenden Abgases durch eine Abgassonde erfasst wird. Dabei wird während eines Betriebszustands des Verbrennungsmotors, in welchem kein Kraftstoff in die Brennräume des Verbrennungsmotors eingespritzt wird, Sekundärluft in den Abgaskanal eingeblasen und während der Einblasung der Sekundärluft oder danach die Abgassonde abgeglichen.

Aus der DE 10 2010 062 257 A1 ist eine Vorrichtung zur Abgasnachbehandlung eines Verbrennungsmotors bekannt, bei der ein Brenner vorgesehen ist, mit welchem die Abgastemperatur stromabwärts eines Auslasses des Verbrennungsmotors und stromaufwärts einer Abgasnachbehandlungskomponente erhöht werden kann.

Aus der DE 10 2012 021 573 A1 ist eine Vorrichtung zur Abgasnachbehandlung eines Verbrennungsmotor bekannt, in welcher ein Abgasbrenner, ein erster Drei-Wege-Katalysator, eine Lambdasonde und ein zweiter Drei-Wege-Katalysator, in dieser Reihenfolge, angeordnet sind, um die Abgasemission während einer Kaltstartphase zu reduzieren.

Der Erfindung liegt nun die Aufgabe zugrunde, ein möglichst schnelles Aufheizen des Drei-Wege-Katalysators in der Kaltstartphase zu ermöglichen und die Emissionen während des Aufheizens des Drei-Wege-Katalysators möglichst gering zu halten.

Erfindungsgemäß wird diese Aufgabe durch eine Vorrichtung zur Abgasnachbehandlung eines Verbrennungsmotors, welche mit einem Auslass des Verbrennungsmotors verbindbar ist, gelöst, wobei die Vorrichtung eine Abgasanlage mit einem Abgaskanal umfasst, in welchem ein Drei-Wege-Katalysator angeordnet ist. Die Vorrichtung umfasst ferner einen Abgasbrenner, wobei am Abgaskanal stromaufwärts des Drei-Wege-Katalysators eine Einleitstelle für die Brennerabgase des Abgasbrenners vorgesehen ist. Es ist vorgesehen, dass der Drei-Wege-Katalysator als Lambdasondenkatalysator ausgeführt ist, wobei stromabwärts eines ersten Katalysatorvolumens des Drei-Wege-Katalysators und stromaufwärts eines zweiten Katalysatorvolumens des Drei-Wege-Katalysators eine Lambdasonde angeordnet ist. Dabei weist das erste Katalysatorvolumen eine geringere Sauerstoffspeicherfähigkeit als das zweite Katalysatorvolumen auf. Die Kombination eines Abgasbrenners mit einem Lambdasondenkatalysator ermöglicht es, die Emissionen während der Heizphase des Drei-Wege-Katalysators zu minimieren. Dabei wird das Mischlambda aus Abgas des Verbrennungsmotors und Brennerabgas auf ein stöchiometrisches Abgas mithilfe der Lambdasonde des Lambdasondenkatalysators eingeregelt. Der Drei-Wege-Katalysator verfügt über eine Sauerstoffspeicherfähigkeit (OSC - Oxygen Storage Capacity). Diese Sauerstoffspeicherfähigkeit führt dazu, dass die Abweichung des Lambdasignals an der Lambdasonde des Lambdasondenkatalysators zeitverzögert erkannt wird. Aus diesem Grund ist die Lambdasonde näher am Einlass des Drei-Wege-Katalysators als am Auslass positioniert, sodass die Sauerstoffspeicherfähigkeit des zweiten Katalysatorvolumens größer als die Sauerstoffspeicherfähigkeit des ersten Katalysatorvolumens ist. Somit kann das zweite Katalysatorvolumen des Drei-Wege-Katalysators genutzt werden, um einen Fettdurchbruch oder einen Magerdurchbruch zu vermeiden. Darüber hinaus kann die Funktion des Drei-Wege-Katalysators mit der Lambdasonde diagnostiziert werden, ohne dass ein Lambdadurchbruch während der Diagnose auftritt.

Durch die in den abhängigen Ansprüchen aufgeführten Merkmale sind vorteilhafte Verbesserungen und nicht triviale Weiterentwicklungen der im unabhängigen Anspruch angegebenen Vorrichtung zur Abgasnachbehandlung möglich.

In einer bevorzugten Ausführungsform der Erfindung ist vorgesehen, dass das erste Katalysatorvolumen 15 - 35 % des Gesamtvolumens und das zweite Katalysatorvolumen 65 - 85 % des Gesamtvolumens des Drei-Wege-Katalysators entspricht. Durch eine entsprechende Aufteilung der Katalysatorvolumina kann sichergestellt werden, dass bei einem unterstöchiometrischen oder überstöchiometrischen Betrieb des Abgasbrenners stets eine hinreichende Sauerstoffspeicherfähigkeit im zweiten Katalysatorvolumen vorhanden ist, um einen Fettdurchbruch oder Magerdurchbruch durch den Drei-Wege-Katalysator betriebssicher zu verhindern.

In einer vorteilhaften Ausführungsform der Vorrichtung ist vorgesehen, dass die Lambdasonde als Sprungsonde ausgeführt ist. Durch eine Sprungsonde kann der Umschlag zwischen einem unterstöchiometrischen Abgas und einem überstöchiometrischen Abgas an der Lambdasonde besonders einfach detektiert werden. Somit kann das Verbrennungsluftverhältnis des Abgasbrenners durch eine Anpassung der Kraftstoffmenge entsprechend angepasst werden, um einen Wechsel zwischen einem überstöchiometrischen Betrieb und einem unterstöchiometrischen Betrieb einzuleiten.

Alternativ ist mit Vorteil vorgesehen, dass die Lambdasonde als Breitbandsonde ausgeführt ist. Alternativ kann das Lambda im Abgas auch durch eine Breitbandsonde bestimmt werden. Eine Breitbandsonde ist jedoch in der Regel teurer als eine Sprungsonde und um den Umschlagpunkt (λ = 1) weniger sensitiv. Eine Breitbandsonde bietet jedoch die Möglichkeit, das Lambda nicht nur qualitativ, sondern auch quantitativ zu erfassen.

In einer weiteren Verbesserung der Erfindung ist vorgesehen, dass der Abgaskanal stromabwärts der Einleitstelle und stromaufwärts des Drei-Wege-Katalysators frei von einer Lambdasonde ausgeführt ist. Durch den Entfall weiterer Lambdasonden können die Kosten für das Abgasnachbehandlungssystem reduziert werden. Eine weitere Lambdasonde ist auch nicht zwingend erforderlich, da das Verbrennungsluftverhältnis des Abgasbrenners nicht direkt geregelt wird, sondern über eine Vorsteuerung mit einer entsprechend wechselnden Amplitude erfolgt.

Alternativ kann in dem Abgaskanal stromaufwärts der Einleitstelle auch eine weitere Lambdasonde angeordnet sein, um das Verbrennungsluftverhältnis des Verbrennungsmotors exakter regeln zu können.

In einer bevorzugten Ausführungsform der Vorrichtung ist vorgesehen, dass dem Abgasbrenner ein Sekundärluftsystem zur Steuerung der dem Abgasbrenner zugeführten Frischluftmenge zugeordnet ist. Durch ein Sekundärluftsystem kann die dem Abgasbrenner zugeführte Frischluftmenge exakt eingeregelt werden, wodurch das Verbrennungsluftverhältnis des Abgasbrenners mit geringer Schwankungsbreite eingestellt werden kann.

Ferner ist mit Vorteil vorgesehen, dass der Abgasbrenner einen Kraftstoffinjektor umfasst, mit welchem ein Kraftstoff in eine Brennkammer des Abgasbrenners eingebracht werden kann. Durch einen Kraftstoffinjektor kann auf einfache Art und Weise das Verbrennungsluftverhältnis das Abgasbrenners eingestellt werden. Dabei wird insbesondere ein konstante Frischluftmenge gewählt und das Verbrennungsluftverhältnis des Abgasbrenners durch eine Erhöhung oder ein Absenken der mittels des Kraftstoffinjektors eingespritzten Kraftstoffmenge angepasst.

In einer bevorzugten Ausführungsform der Erfindung ist in der Abgasanlage stromaufwärts des Drei-Wege-Katalysators eine Turbine eines Abgasturboladers angeordnet. In einer bevorzugten Ausführungsform der Erfindung ist der Verbrennungsmotor als mittels eines Abgasturboladers aufgeladener Verbrennungsmotor ausgeführt, wobei in dem Abgaskanal stromabwärts des Auslasses und stromaufwärts des Katalysators eine Turbine des Abgasturboladers angeordnet ist. Durch die Turbine des Abgasturboladers wird das heiße Brennerabgas mit dem Abgas des Verbrennungsmotors vermischt, wodurch ein homogenes Abgas mit einer gleichmäßigen Verteilung der unverbrannten Abgaskomponenten oder dem Restsauerstoff aus dem Brennerabgas erreicht wird. Dadurch können die unverbrannten Abgaskomponenten mit dem Sauerstoff aus der Sekundärluftzufuhr auf der katalytisch wirksamen Oberfläche des Katalysators umgesetzt werden, wodurch die Temperatur des Drei-Wege-Katalysators weiter steigt.

Alternativ kann der Verbrennungsmotor jedoch auch als Saugmotor ausgeführt werden, da eine Turbine in der Abgasanlage keine zwingende Voraussetzung ist.

Erfindungsgemäß wird ein Verfahren zur Abgasnachbehandlung eines Verbrennungsmotors mit einer erfindungsgemäßen Vorrichtung zur Abgasnachbehandlung vorgeschlagen, welches folgende Schritte umfasst:
- Aktivieren des Abgasbrenners, wobei die dem Abgasbrenner zugeführte Kraftstoffmenge vorgesteuert wird,
- Erfassen eines Verbrennungsluftverhältnisses stromabwärts des ersten Katalysatorvolumens und stromaufwärts des zweiten Katalysatorvolumens des Drei-Wege-Katalysators,
- Veränderung der Kraftstoffmenge, wenn an der Lambdasonde ein Fettdurchbruch oder ein Magerdurchbruch detektiert wird.

Das vorgeschlagene Verfahren ermöglicht es, das Verbrennungsluftverhältnis des Verbrennungsmotors so zu regeln, dass bei maximaler Heizwirkung ein Emissionsoptimum erreicht wird. Dazu wird das Abgasmischlambda während der Heizphase des Katalysators ermittelt und die Abweichung von einem stöchiometrischen Verbrennungsluftverhältnis in einen Wert zur Korrektur des Kraftstoffgemisches umgewandelt. Somit lässt sich die Korrektur durch eine Anpassung der in die Brennräume des Verbrennungsmotors eingespritzten Kraftstoffmenge durchführen, welche in Verbindung mit dem eingebrachten Brennerabgas das emissionsneutrale Abgasmischlambda von 1, also ein stöchiometrisches Abgas, bereitstellt. Dabei werden durch die Lambdasonde Fett- oder Magerdurchbrüche rechtzeitig erkannt, sodass diese durch das zweite Katalysatorvolumen stromabwärts der Lambdasonde kompensiert werden können und Lambdadurchbrüche durch den Drei-Wege-Katalysator betriebssicher vermieden werden.

Besonders bevorzugt ist dabei, wenn der dem Abgasbrenner zugeführte Luftmassenstrom konstant gehalten wird und die Anpassung des Verbrennungsluftverhältnisses des Abgasbrenners durch eine Anpassung der in die Brennkammer des Abgasbrenners eingespritzten Kraftstoffmenge erfolgt. Dadurch ist eine besonders einfache und genaue Vorsteuerung des Verbrennungsluftverhältnisses des Abgasbrenners möglich.

In einer vorteilhaften Ausführungsform des Verfahrens ist vorgesehen, dass die Kraftstoffmenge des Abgasbrenners in einem ersten Betriebszustand des Abgasbrenners derart vorgesteuert wird, dass der Abgasbrenner mit einem unterstöchiometrischen Verbrennungsluftverhältnis betrieben wird und in einem zweiten Betriebszustand derart vorgesteuert wird, dass der Abgasbrenner mit einem überstöchiometrischen Verbrennungsluftverhältnis betrieben wird. Durch einen Wechsel zwischen einem unterstöchiometrischen Verbrennungsluftverhältnis und einem überstöchiometrischen Verbrennungsluftverhältnis kann sichergestellt werden, dass sowohl unverbrannte Abgaskomponenten, insbesondere Kohlenstoffmonoxid, unverbrannte Kohlenwasserstoffe und Wasserstoff oxidiert als auch Stickoxide reduziert werden. Somit können die Emissionen während der Heizphase des Drei-Wege-Katalysators minimiert werden.

Besonders bevorzugt ist dabei, wenn der Abgasbrenner alternierend mit einem unterstöchiometrischen Verbrennungsluftverhältnis und mit einem überstöchiometrischen Verbrennungsluftverhältnis betrieben wird. Durch einen alternierenden Betrieb können Lambdadurchbrüche in der Heizphase vermieden werden, wobei ein effektives Aufheizen des Drei-Wege-Katalysators und eine gleichzeitige Minimierung der Endrohr-Emissionen sichergestellt wird.

Dabei ist mit Vorteil vorgesehen, dass das unterstöchiometrische Verbrennungsluftverhältnis im Bereich von 0,93 - 0,98 vorgesteuert wird. Durch ein unterstöchiometrisches Brennerabgas in einem Lambdabereich zwischen 0,93 - 0,98 wird ein langsames Ausräumen der Sauerstoffspeicher des Drei-Wege-Katalysators sichergestellt. Dabei erfolgt das Ausräumen langsam genug, um weder zu erhöhten Sekundäremissionen noch zu einem Magerdurchbruch durch den Drei-Wege-Katalysator zu führen.

Ferner ist mit Vorteil vorgesehen, dass das überstöchiometrische Verbrennungsluftverhältnis im Bereich von 1,02 - 1,07 vorgesteuert wird. Durch ein überstöchiometrisches Verbrennungsluftverhältnis im Bereich von 1,02 - 1,07 erfolgt ein langsames Befüllen der Sauerstoffspeicher des Drei-Wege-Katalysators. Dabei wird sichergestellt, dass ein Magerdurchbruch und ein damit verbundener Anstieg der Sickoxid-Emissionen betriebssicher vermieden werden. Gleichzeitig liegt hinreichend viel Sauerstoff vor, um die unverbrannten Abgaskomponenten, insbesondere unverbrannte Kohlenwasserstoffe, Kohlenstoffmonoxid und Wasserstoff zu oxidieren und somit die Emissionen zu minimieren.

In weiterer bevorzugter Ausgestaltung der Erfindung ist vorgesehen, dass der Abgasbrenner deaktiviert wird, wenn der Drei-Wege-Katalysator eine Schwellentemperatur erreicht hat. Dadurch kann bei Erreichen der Schwellentemperatur auf einen Betriebszustand mit geringeren Rohemissionen und erhöhtem Wirkungsgrad des Verbrennungsmotors gewechselt werden. Dadurch kann der Heizbetrieb des Katalysators zeitlich begrenzt werden und die Kraftstoffeffizienz des Verbrennungsmotors gesteigert werden.

Besonders bevorzugt ist dabei, wenn die Schwellentemperatur die Light-Off-Temperatur einer drei-Wege-katalytisch wirksamen Beschichtung des Katalysators ist. Ab der Light-Off-Temperatur kann eine effiziente Konvertierung von Schadstoffen im Abgas des Verbrennungsmotors durch den Katalysator sichergestellt werden. Dabei kann ein weiteres Aufheizen durch eine exotherme Umsetzung von unverbrannten Abgaskomponenten, insbesondere von unverbrannten Kohlenwasserstoffen und von Kohlenstoffmonoxid auf der katalytisch wirksamen Oberfläche des Katalysators erfolgen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den verschiedenen Figuren mit gleichen Bezugszeichen gekennzeichnet. Es zeigen:
- Figur 1: ein erstes Ausführungsbeispiel eines schematisch dargestellten Verbrennungsmotors mit einer erfindungsgemäßen Vorrichtung zur Abgasnachbehandlung;
- Figur 2: ein zweites Ausführungsbeispiel eines Verbrennungsmotors mit einer erfindungsgemäßen Vorrichtung zur Abgasnachbehandlung; und
- Figur 3: ein Diagramm zum zeitlichen Ablauf des Verbrennungsluftverhältnisses des Abgasbrenners bei der Durchführung eines erfindungsgemäßen Verfahrens zur Abgasnachbehandlung eines Verbrennungsmotors.

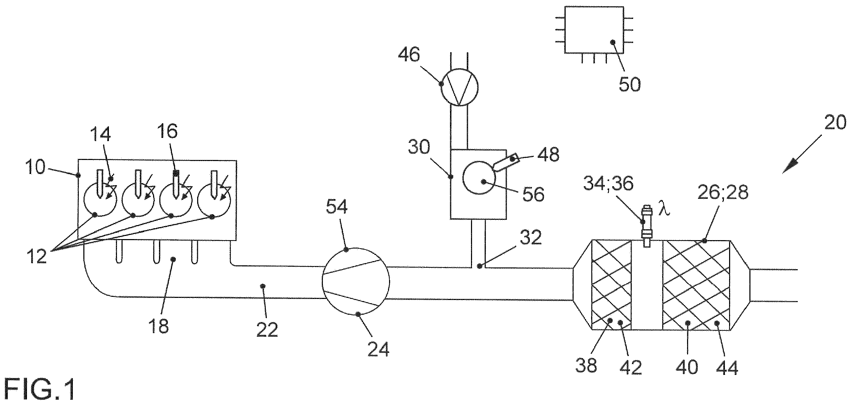

Figur 1 zeigt einen Verbrennungsmotor 10 mit mehreren Brennräumen 12, welcher mit seinem Auslass 18 mit einer Abgasanlage 20 verbunden ist. Der Verbrennungsmotor 10 ist als direkteinspritzender Ottomotor ausgeführt. An jedem der Brennräume 12 sind jeweils eine Zündkerze 14 und ein Kraftstoffinjektor 16 angeordnet, um Kraftstoff in den jeweiligen Brennraum 12 einzuspritzen und das Kraftstoff-Luft-Gemisch zu zünden. Die Abgasanlage 20 umfasst einen Abgaskanal 22, in welchem in Strömungsrichtung eines Abgases des Verbrennungsmotors 10 durch den Abgaskanal eine Turbine 24 eines Abgasturboladers 54 und stromabwärts der Turbine 24 ein Drei-Wege-Katalysator 26 angeordnet sind. Der Drei-Wege-Katalysator 26 ist als Lambdasondenkatalysator 28 ausgeführt. Dazu weist der Drei-Wege-Katalysator 26 ein erstes Katalysatorvolumen 38 und ein stromabwärts des ersten Katalysatorvolumens 38 angeordnetes zweites Katalysatorvolumen 40 auf, wobei in dem Gehäuse des Drei-Wege-Katalysators 26 stromabwärts des ersten Katalysatorvolumens 38 und stromaufwärts des zweiten Katalysatorvolumens 40 eine Lambdasonde 34 angeordnet ist. Die Lambdasonde 34 ist vorzugsweise wie in Figur 1 dargestellt als Sprungsonde 36 ausgeführt und kann damit einen Umschlag zwischen einem unterstöchiometrischen Abgas und einem überstöchiometrischen Abgas detektieren. Der Sauerstoffspeicher 42 des ersten Katalysatorvolumens 38 ist kleiner als der Sauerstoffspeicher 44 des zweiten Katalysatorvolumens 40, sodass das zweite Katalysatorvolumen 40 eine größere Sauerstoffspeicherfähigkeit als das erste Katalysatorvolumen 38 aufweist. Die Lambdasonde 34 ist im vorderen Abschnitt des Drei-Wege-Katalysators 26 angeordnet, wobei das erste Katalysatorvolumen 38 etwa ein Drittel und das zweite Katalysatorvolumen 40 etwa zwei Drittel des gesamten Katalysatorvolumens des Drei-Wege-Katalysators 26 beinhaltet.

Die Abgasanlage 20 umfasst ferner einen Abgasbrenner 30, welcher über ein Sekundärluftsystem 46 mit Frischluft und über eine Kraftstoffleitung mit Kraftstoff versorgt wird. Der Abgasbrenner 30 umfasst eine Brennkammer 56, in welche mittels eines Kraftstoffinjektors 48 ein brennbarer Kraftstoff einbringbar ist. Vorzugsweise werden der Kraftstoffinjektor 48 des Abgasbrenners 30 und die Kraftstoffinjektoren 16 des Verbrennungsmotors 10 aus einem gemeinsamen Tank mit Kraftstoff versorgt. Stromabwärts des Auslasses 18 und stromaufwärts des Drei-Wege-Katalysators 26 ist am Abgaskanal 22 eine Einleitstelle 32 ausgebildet, an welcher das heiße Brennerabgas des Abgasbrenners 30 in den Abgaskanal 22 eingeleitet wird, um den Drei-Wege-Katalysator 26 nach einem Kaltstart des Verbrennungsmotors 10 auf seine Betriebstemperatur aufzuheizen. Stromaufwärts der Einleitstelle 32 oder stromabwärts des Drei-Wege-Katalysators 26 können weitere Katalysatoren angeordnet sein. Dem Verbrennungsmotor 10 ist ferner ein Motorsteuergerät 50 zugeordnet, mit welchem die Kraftstoffmenge des in die Brennräume 12 eingespritzten Kraftstoffs geregelt werden kann. Ferner kann der Abgasbrenner 30 durch das Motorsteuergerät 50 gesteuert werden.

Nach einem Kaltstart des Verbrennungsmotors 10 wird der Abgasbrenner 30 durch das Motorsteuergerät 50 aktiviert, um den Drei-Wege-Katalysator 26 möglichst schnell auf die für eine hohe Konvertierungsrate erforderliche Light-Off-Temperatur des Drei-Wege-Katalysators 26 aufzuheizen. Während dieser aktiven Heizphase wird die Lambdaregelung derart ausgeführt, dass die gasförmigen Emissionen des Verbrennungsmotors 10 möglichst gering sind, bis der Drei-Wege-Katalysator 26 seine Light-Off-Temperatur erreicht hat. Um möglichst geringe gasförmige Emissionen in der aktiven Heizphase darzustellen, ist es erforderlich, das Mischlambda aus dem Abgas des Verbrennungsmotors 10 und dem Brennerabgas des Abgasbrenners 30 auf ein stöchiometrisches Verhältnis zu regeln. Diese Regelung erfolgt über die Lambdasonde 34 im Lambdasondenkatalysator 28. Um eine entsprechende Regelung des Verbrennungsluftverhältnisses durch die Lambdasonde 34 im Lambdasondenkatalysator 28 zu ermöglichen, ist der Abgaskanal 22 stromabwärts des Einleitstelle 32 und stromaufwärts des Lambdasondenkatalysators 28 frei von einem weiteren Katalysator ausgeführt. Der Drei-Wege-Katalysator 26 weist eine Sauerstoffspeicherfähigkeit (OSC) auf. Diese Speicherfähigkeit führt dazu, dass die Abweichung des Lambdasignals in Richtung überstöchiometrisch oder unterstöchiometrisch zeitverzögert von der Lambdasonde 34 erkannt wird. Aus diesem Grund ist das erste Katalysatorvolumen 38 kleiner als das zweite Katalysatorvolumen 40 ausgeführt. Das zweite Katalysatorvolumen kann somit genutzt werden, um einen Durchbruch in Richtung "fett" oder "mager" zu vermeiden. Darüber hinaus kann die Funktion des Drei-Wege-Katalysators 26 mit der Lambdasonde 34 diagnostiziert werden, ohne das ein Fett- oder Magerdurchbruch während der Diagnose der Lambdasonde 34 auftritt.

Da der Abgaskanal 22 stromaufwärts des Drei-Wege-Katalysators 26 frei von einer weiteren Lambdasonde ausgeführt ist, kann das Brennergemisch des Abgasbrenners 30 nicht direkt geregelt werden. Der Abgasbrenner 30 wird vorgesteuert und mit einer Zwangsamplitude beaufschlagt. Dabei erfolgt die Vorsteuerung des Lambdas des Abgasbrenners 30 über die in die Brennkammer 56 eindosierte Kraftstoffmenge. Die Zwangsamplitude wird beispielsweise mit einem Abstand von jeweils 5 % zu einem stöchiometrischen Verbrennungsluftverhältnis gewählt, sodass alternierend zwischen einem Betrieb des Abgasbrenners 30 mit einem unterstöchiometrischen Lambda von 0,95 und einem überstöchiometrischen Lambda von 1,05 gewechselt wird. Sobald während eines unterstöchiometrischen Betriebs des Abgasbrenners 30 der Sauerstoffspeicher 42 des ersten Katalysatorvolumens 38 ausgeräumt ist, erkennt die Lambdasonde 34 einen Fettdurchbruch. Zu diesem Zeitpunkt wird die Zwangsamplitude auf einen überstöchiometrischen Magerbetrieb verstellt. Ab diesem Zeitpunkt wird der Sauerstoffspeicher 42 des ersten Katalysatorvolumens 38 wieder befüllt und die Lambdasonde 34 detektiert ein stöchiometrisches Abgas. Sobald der Sauerstoffspeicher 42 des ersten Katalysatorvolumens 38 vollständig gefüllt ist, erkennt die Lambdasonde 34 einen Magerdurchbruch und die Zwangsamplitude wird wieder auf einen unterstöchiometrischen Betrieb des Abgasbrenners 30 verstellt. Dabei erfolgt der alternierende Wechsel zwischen einem unterstöchiometrischen und einem überstöchiometrischen Verbrennungsluftverhältnis des Abgasbrenners 30 so lange, bis der Abgasbrenner 30 wieder deaktiviert wird. Dies erfolgt frühstens, wenn der Drei-Wege-Katalysator 26 seine Light-Off-Temperatur erreicht hat.

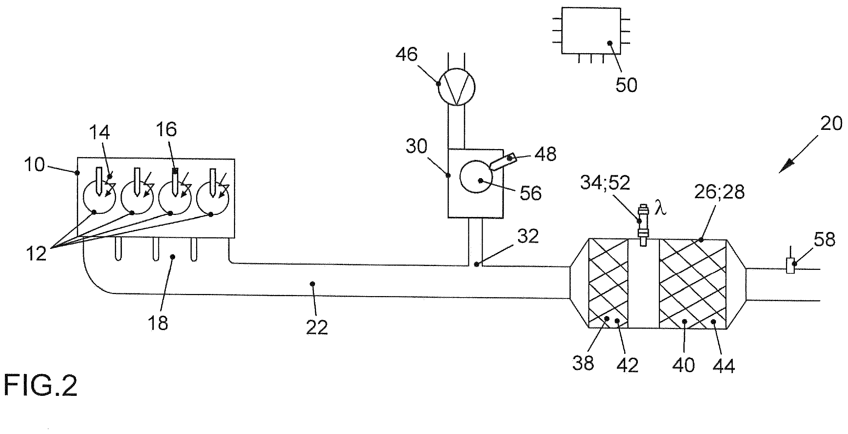

In Figur 2 ist ein alternatives Ausführungsbeispiel eines Verbrennungsmotors 10 mit einer Abgasanlage 20 dargestellt. Bei im Wesentlichen gleichem Aufbau wie zu Figur 1 ausgeführt, wird im Folgenden nur auf die Unterschiede eingegangen. In diesem Ausführungsbeispiel ist der Verbrennungsmotor 10 als Saugmotor ausgeführt, sodass die Turbine 24 des Abgasturboladers 54 entfällt. Zudem ist die Lambdasonde 34 in diesem Ausführungsbeispiel als Breitbandsonde 52 ausgeführt, sodass eine quantitative Bestimmung des Abgaslambdas im Drei-Wege-Katalysator 26 möglich ist. Ferner umfasst die Abgasanlage 20 in diesem Ausführungsbeispiel einen Temperatursensor 58, mit welchem die Temperatur des Drei-Wege-Katalysators 26 zumindest mittelbar ermittelt werden kann.

Das Verfahren zum Aufheizen des Drei-Wege-Katalysators 26 erfolgt analog dem zu Figur 1 beschriebenen Verfahren. Das Verfahren wird beendet, sobald die durch ein Modell oder einen Temperatursensor 58 bereitgestellte Temperatur des Katalysators 26 einen Schwellenwert erreicht oder überschritten hat.

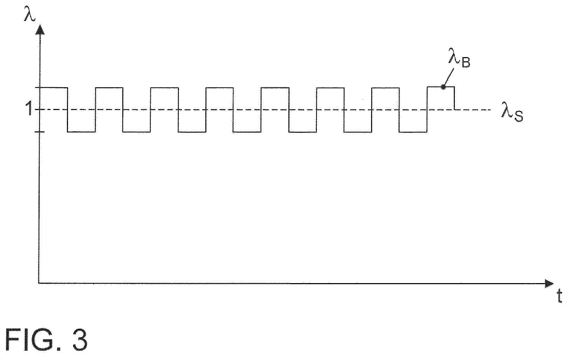

In Figur 3 sind das Verbrennungsluftverhältnis λ_{B} des Abgasbrenners 30 sowie das Abgasluftverhältnis λ_{S} an der Lambdasonde 34 dargestellt. Dabei wechselt das Verbrennungsluftverhältnis des Abgasbrenners 30 alternierend zwischen einem unterstöchiometrischen Verbrennungsluftverhältnis und einem überstöchiometrischen Verbrennungsluftverhältnis. Dabei wird der Sauerstoffspeicher 42 des ersten Katalysatorvolumens 38 des Drei-Wege-Katalysators 26 befüllt und ausgeräumt, sodass sich stromabwärts des ersten Katalysatorvolumens 38 an der Lambdasonde 34 ein während der gesamten Heizphase stöchiometrisches Abgas λ_{S} = 1 einstellt.

Durch das vorgeschlagene Verfahren zur Abgasnachbehandlung kann ein Aufheizen des Drei-Wege-Katalysators 26 in der Kaltstartphase des Verbrennungsmotors 10 erfolgen, wobei die Emissionen beim Aufheizen des Drei-Wege-Katalysators 26 minimiert werden. Während der Heizphase des Drei-Wege-Katalysators 26 wird die Lambdaregelung derart ausgeführt, dass die gasförmigen Emissionen des Verbrennungsmotors 10 minimiert werden, bis der Drei-Wege-Katalysator 26 seine Light-Off-Temperatur erreicht hat und eine effiziente Konvertierung der gasförmigen Emissionen durch den Drei-Wege-Katalysator 26 sichergestellt ist.

### Bezugszeichenliste

- 10: Verbrennungsmotor
- 12: Brennraum
- 14: Zündkerze
- 16: Kraftstoffinjektor
- 18: Auslass
- 20: Abgasanlage
- 22: Abgaskanal
- 24: Turbine
- 26: Drei-Wege-Katalysator
- 28: Lambdasondenkatalysator
- 30: Abgasbrenner
- 32: Einleitstelle
- 34: Lambdasonde
- 36: Sprungsonde
- 38: erstes Katalysatorvolumen
- 40: zweites Katalysatorvolumen
- 42: Sauerstoffspeicher des ersten Katalysatorvolumens
- 44: Sauerstoffspeicher des zweiten Katalysatorvolumens
- 46: Sekundärluftsystem
- 48: Kraftstoffinjektor
- 50: Motorsteuergerät
- 52: Breitbandsonde
- 54: Abgasturbolader
- 56: Brennkammer
- λ_{B}: Verbrennungsluftverhältnis des Abgasbrenners
- λ_{E}: Verbrennungsluftverhältnis des Verbrennungsmotors
- λₘ: Abgasluftverhältnis stromabwärts der Einleitstelle
- λ_{S}: Abgasluftverhältnis an der Lambdasonde
- t: Zeit

## Patentansprüche

1. Vorrichtung zur Abgasnachbehandlung eines Verbrennungsmotor (10), welche mit einem Auslass (18) des Verbrennungsmotors (10) verbindbar ist, wobei die Vorrichtung eine Abgasanlage (20) mit einem Abgaskanal (22) umfasst, in welchem ein Drei-Wege-Katalysator (26) angeordnet ist, sowie mit einem Abgasbrenner (30), wobei am Abgaskanal (22) stromaufwärts des Drei-Wege-Katalysators (26) eine Einleitstelle (32) für die Brennerabgase des Abgasbrenners (30) vorgesehen ist, **dadurch gekennzeichnet, dass** der Drei-Wege-Katalysator (26) als Lambdasondenkatalysator (28) ausgeführt ist, wobei stromabwärts eines ersten Katalysatorvolumens (38) des Drei-Wege-Katalysators (26) und stromaufwärts eines zweiten Katalysatorvolumens (40) eine Lambdasonde (34) angeordnet ist, und wobei das erste Katalysatorvolumen (38) eine geringere Sauerstoffspeicherfähigkeit als das zweite Katalysatorvolumen (40) aufweist.

2. Vorrichtung zur Abgasnachbehandlung nach Anspruch 1, **dadurch gekennzeichnet, dass** das erste Katalysatorvolumen (38) 15 - 35 % des Gesamtvolumens des Drei-Wege-Katalysators (26) und das zweite Katalysatorvolumen (40) 65 - 85 % des Gesamtvolumens des Drei-Wege-Katalysators (26) entspricht.

3. Vorrichtung zur Abgasnachbehandlung nach Anspruch 1 oder 2, **dadurch gekennzeichnet, dass** die Lambdasonde (34) als Sprungsonde (36) ausgeführt ist.

4. Vorrichtung zur Abgasnachbehandlung nach Anspruch 1 oder 2, **dadurch gekennzeichnet, dass** die Lambdasonde (34) als Breitbandsonde (52) ausgeführt ist.

5. Vorrichtung zur Abgasnachbehandlung nach einem der Ansprüche 1 bis 4, **dadurch gekennzeichnet, dass** der Abgaskanal (22) stromabwärts der Einleitstelle (32) und stromaufwärts des Drei-Wege-Katalysators (26) frei von einer Lambdasonde (34) ausgeführt ist.

6. Vorrichtung zur Abgasnachbehandlung nach einem der Ansprüche 1 bis 5, **dadurch gekennzeichnet, dass** dem Abgasbrenner (30) ein Sekundärluftsystem (46) zur Steuerung der dem Abgasbrenner (30) zugeführten Frischluftmenge zugeordnet ist.

7. Vorrichtung zur Abgasnachbehandlung nach einem der Ansprüche 1 bis 6, **dadurch gekennzeichnet, dass** der Abgasbrenner (30) einen Kraftstoffinjektor (48) umfasst, mit welchem ein Kraftstoff in eine Brennkammer des Abgasbrenners (30) eingebracht werden kann.

8. Vorrichtung zur Abgasnachbehandlung nach einem der Ansprüche 1 bis 7, **dadurch gekennzeichnet, dass** in der Abgasanlage (20) stromaufwärts des Drei-Wege-Katalysators (26) eine Turbine (24) eines Abgasturboladers (54) angeordnet ist.

9. Verfahren zur Abgasnachbehandlung eines Verbrennungsmotors (10) mit einer Vorrichtung zur Abgasnachbehandlung nach einem der Ansprüche 1 bis 8, umfassend folgende Schritte:
- Aktivieren des Abgasbrenners (30), wobei die dem Abgasbrenner (30) zugeführte Kraftstoffmenge und/oder die dem Abgasbrenner (30) zugeführte Frischluftmenge vorgesteuert wird,
- Erfassen eines Verbrennungsluftverhältnisses stromabwärts des ersten Katalysatorvolumens (38) und stromaufwärts des zweiten Katalysatorvolumens (40) des Drei-Wege-Katalysators (26),
- Veränderung der Kraftstoffmenge und/oder der Frischluftmenge, wenn an der Lambdasonde (34) ein Fettdurchbruch oder ein Magerdurchbruch detektiert wird.

10. Verfahren zur Abgasnachbehandlung nach Anspruch 9, **dadurch gekennzeichnet, dass** die Kraftstoffmenge des Abgasbrenners (30) in einem ersten Betriebszustand des Abgasbrenners (30) derart vorgesteuert wird, dass der Abgasbrenner (30) mit einem unterstöchiometrischen Verbrennungsluftverhältnis (λ_{B} < 1) betrieben wird und in einem zweiten Betriebszustand des Abgasbrenners (30) derart vorgesteuert wird, dass der Abgasbrenner (30) mit einem überstöchiometrischen Verbrennungsluftverhältnis (λ_{B} > 1) betrieben wird.

11. Verfahren zur Abgasnachbehandlung nach Anspruch 10, **dadurch gekennzeichnet, dass** der Abgasbrenner (30) alternierend mit einem unterstöchiometrischen Verbrennungsluftverhältnis (λ_{B} < 1)und mit einem überstöchiometrischen Verbrennungsluftverhältnis (λ_{B} > 1) betrieben wird.

12. Verfahren zur Abgasnachbehandlung nach Anspruch 10 oder 11, **dadurch gekennzeichnet, dass** das unterstöchiometrische Verbrennungsluftverhältnis (λ_{B}) im Bereich von 0,93 - 0,98 vorgesteuert wird.

13. Verfahren zur Abgasnachbehandlung nach einem der Ansprüche 10 bis 12, **dadurch gekennzeichnet, dass** das überstöchiometrische Verbrennungsluftverhältnis (λ_{B}) im Bereich von 1,02 - 1,07 vorgesteuert wird.

14. Verfahren zur Abgasnachbehandlung nach einem der Ansprüche 9 bis 13, **dadurch gekennzeichnet, dass** der Abgasbrenner (30) deaktiviert wird, wenn der Drei-Wege-Katalysator (26) eine Schwellentemperatur (T_{S}) erreicht hat.

## Claims

1. Device for treating the exhaust gas of an internal combustion engine (10), which device can be connected to an outlet (18) of the internal combustion engine (10), wherein the device comprises an exhaust gas system (20) having an exhaust gas channel (22) in which a three-way catalytic converter (26) is arranged, and having an exhaust gas burner (30), wherein a discharge point (32) for the burner exhaust gas of the exhaust gas burner (30) is provided at the exhaust gas channel (22) upstream of the three-way catalytic converter (26), **characterized in that** the three-way catalytic converter (26) is designed as a lambda probe catalytic converter (28), wherein a lambda probe (34) is arranged downstream of a first catalytic converter volume (38) of the three-way catalytic converter (26) and upstream of a second catalytic converter volume (40), and wherein the first catalytic converter volume (38) has a lower oxygen storage capacity than the second catalytic converter volume (40).

2. Device for treating exhaust gas according to claim 1, **characterized in that** the first catalytic converter volume (38) corresponds to 15 - 35% of the total volume of the three-way catalytic converter (26), and the second catalytic converter volume (40) corresponds to 65 - 85% of the total volume of the three-way catalytic converter (26).

3. Device for treating exhaust gas according to claim 1 or 2, **characterized in that** the lambda probe (34) is designed as a two-point-type sensor (36).

4. Device for treating exhaust gas according to claim 1 or 2, **characterized in that** the lambda probe (34) is designed as a broadband sensor (52).

5. Device for treating exhaust gas according to one of claims 1 through 4, **characterized in that**, downstream of the discharge point (32) and upstream of the three-way catalytic converter (26), the exhaust gas channel (22) is free of a lambda probe (34).

6. Device for treating exhaust gas according to one of claims 1 through 5, **characterized in that** a secondary air system (46) for controlling the fresh air quantity supplied to the exhaust gas burner (30) is associated with the exhaust gas burner (30).

7. Device for treating exhaust gas according to one of claims 1 through 6, **characterized in that** the exhaust gas burner (30) comprises a fuel injector (48) with which a fuel can be introduced into a combustion chamber of the exhaust gas burner (30).

8. Device for treating exhaust gas according to one of claims 1 through 7, **characterized in that** a turbine (24) of an exhaust gas turbocharger (54) is arranged in the exhaust gas system (20), upstream of the three-way catalytic converter (26).

9. Method for treating the exhaust gas of an internal combustion engine (10) with a device for treating exhaust gas according to one of claims 1 through 8, comprising the following steps:
- activating the exhaust gas burner (30), wherein the fuel quantity supplied to the exhaust gas burner (30) and/or the fresh air quantity supplied to the exhaust gas burner (30) is pilot controlled,
- detecting a combustion air ratio downstream of the first catalytic converter volume (38) and upstream of the second catalytic converter volume (40) of the three-way catalytic converter (26),
- varying the fuel quantity and/or the fresh air quantity if a rich breakthrough or a lean breakthrough is detected at the lambda probe (34).

10. Method for treating exhaust gas according to claim 9, **characterized in that** the fuel quantity of the exhaust gas burner (30), in a first operating state of the exhaust burner (30), is precontrolled in such a way that the exhaust gas burner (30) is operated with a sub-stoichiometric combustion air ratio (λ_{B} < 1) and, in a second operating state of the exhaust burner (30), is precontrolled in such a way that the exhaust gas burner (30) is operated with a super-stoichiometric combustion air ratio (λ_{B} > 1).

11. Method for treating exhaust gas according to claim 10, **characterized in that** the exhaust gas burner (30) is alternately operated with a sub-stoichiometric combustion air ratio (λ_{B} < 1) and with a super-stoichiometric combustion air ratio (λ_{B} > 1).

12. Method for treating exhaust gas according to claim 10 or 11, **characterized in that** the sub-stoichiometric combustion air ratio (λ_{B}) is pilot controlled in the range from 0.93 - 0.98.

13. Method for treating exhaust gas according to one of claims 10 through 12, **characterized in that** the super-stoichiometric combustion air ratio (λ_{B}) is pilot controlled in the range from 1.02 - 1.07.

14. Method for treating exhaust gas according to one of claims 9 through 13, **characterized in that** the exhaust gas burner (30) is deactivated if the three-way catalytic converter (26) has reached a threshold temperature (Ts).

## Revendications

1. Dispositif de post-traitement des gaz d'échappement d'un moteur à combustion interne (10), lequel peut être relié à un échappement (18) du moteur à combustion interne (10), le dispositif comprenant un système d'échappement (20) doté d'un conduit de gaz échappement (22), dans lequel est disposé un catalyseur à trois voies (26), ainsi que d'un brûleur pour gaz d'échappement (30), un point d'introduction (32) pour les gaz d'échappement du brûleur pour gaz d'échappement (30) étant prévu sur le conduit de gaz d'échappement (22) en amont du catalyseur à trois voies (26), **caractérisé en ce que** le catalyseur à trois voies (26) est réalisé sous la forme d'un catalyseur à sonde lambda (28), une sonde lambda (34) étant disposée en aval d'un premier volume de catalyseur (38) du catalyseur à trois voies (26) et en amont d'un second volume de catalyseur (40), et le premier volume de catalyseur (38) présentant une capacité de stockage d'oxygène inférieure au second volume de catalyseur (40).

2. Dispositif de post-traitement des gaz d'échappement selon la revendication 1, **caractérisé en ce que** le premier volume de catalyseur (38) correspond à 15 à 35 % du volume total du catalyseur à trois voies (26) et le second volume de catalyseur (40) à 65 à 85 % du volume total du catalyseur à trois voies (26).

3. Dispositif de post-traitement des gaz d'échappement selon la revendication 1 ou 2, **caractérisé en ce que** la sonde lambda (34) est réalisée sous la forme d'une sonde binaire (36).

4. Dispositif de post-traitement des gaz d'échappement selon la revendication 1 ou 2, **caractérisé en ce que** la sonde lambda (34) est réalisée sous la forme d'une sonde à large bande (52).

5. Dispositif de post-traitement des gaz d'échappement selon l'une quelconque des revendications 1 à 4, **caractérisé en ce que** le conduit de gaz d'échappement (22) est réalisé sans sonde lambda (34) en aval du point d'introduction (32) et en amont du catalyseur à trois voies (26).

6. Dispositif de post-traitement des gaz d'échappement selon l'une quelconque des revendications 1 à 5, **caractérisé en ce qu'**un système d'air secondaire (46) est associé au brûleur pour gaz d'échappement (30) pour commander la quantité d'air frais acheminée dans le brûleur pour gaz d'échappement (30).

7. Dispositif de post-traitement des gaz d'échappement selon l'une quelconque des revendications 1 à 6, **caractérisé en ce que** le brûleur pour gaz d'échappement (30) comprend un injecteur de carburant (48), au moyen duquel un carburant peut être introduit dans une chambre de combustion du brûleur pour gaz d'échappement (30).

8. Dispositif de post-traitement des gaz d'échappement selon l'une quelconque des revendications 1 à 7, **caractérisé en ce qu'**une turbine (24) d'un turbocompresseur à gaz d'échappement (54) est disposée dans le système d'échappement (20) en amont du catalyseur à trois voies (26).

9. Procédé de post-traitement des gaz d'échappement d'un moteur à combustion interne (10) comprenant un dispositif de post-traitement des gaz d'échappement selon l'une quelconque des revendications 1 à 8, comprenant les étapes suivantes :
- activation du brûleur pour gaz d'échappement (30), la quantité de carburant acheminée dans le brûleur pour gaz d'échappement (30) et/ou la quantité d'air frais acheminée dans le brûleur pour gaz d'échappement (30) étant commandée par commande pilote,
- détection d'un rapport d'air de combustion en aval du premier volume de catalyseur (38) et en amont du second volume de catalyseur (40) du catalyseur à trois voies (26),
- modification de la quantité de carburant et/ou de la quantité d'air frais, quand une transition de pauvre à riche ou une transition de riche à pauvre est détectée sur la sonde lambda (34).

10. Procédé de post-traitement des gaz d'échappement selon la revendication 9, **caractérisé en ce que** la quantité de carburant du brûleur pour gaz d'échappement (30) est commandée par commande pilote dans un premier état de fonctionnement du brûleur pour gaz d'échappement (30) de telle manière que le brûleur pour gaz d'échappement (30) fonctionne avec un rapport d'air de combustion sous-stœchiométrique (λ_{B} < 1) et est commandée par commande pilote dans un second état de fonctionnement du brûleur pour gaz d'échappement (30) de telle manière que le brûleur pour gaz d'échappement (30) fonctionne avec un rapport d'air sur-stœchiométrique (λ_{B} > 1).

11. Procédé de post-traitement des gaz d'échappement selon la revendication 10, **caractérisé en ce que** le brûleur pour gaz d'échappement (30) fonctionne alternativement avec un rapport d'air de combustion sous-stœchiométrique (λ_{B} < 1) et avec un rapport d'air de combustion sur-stœchiométrique (λ_{B} > 1).

12. Procédé de post-traitement des gaz d'échappement selon la revendication 10 ou 11, **caractérisé en ce que** le rapport d'air de combustion sous-stœchiométrique (λ_{B}) est commandé par commande pilote dans la plage de 0,93 à 0,98.

13. Procédé de post-traitement des gaz d'échappement selon l'une quelconque des revendications 10 à 12, **caractérisé en ce que** le rapport d'air de combustion sur-stœchiométrique (λ_{B}) est commandé par commande pilote dans la plage de 1,02 à 1,07.

14. Procédé de post-traitement des gaz d'échappement selon l'une quelconque des revendications 9 à 13, **caractérisé en ce que** le brûleur pour gaz d'échappement (30) est désactivé quand le catalyseur à trois voies (26) a atteint une température seuil (T_{S}).
